# FASCICULE DE BREVET EUROPEEN

(11) **EP 1 660 563 B1**
(45) Date de publication et mention de la délivrance du brevet: **21.08.2013**
(21) Numéro de dépôt: 03769574.9
(22) Date de dépôt: 05.09.2003
(51) Int. Cl.: C08G 77/38, C07F 7/08, C07F 7/18

(54) **FONCTIONNALISATION (EPOXYDATION) DE SILICONES ET UTILISATION DE CES SILICONES COMME REVETEMENTS ANTI-ADHERENTS**
FUNKTIONALISIERUNG (EPOXIDIERUNG) VON SILIKONEN UND DEREN ANWENDUNG FÜR ANTIHAFTBESCHICHTUNGEN
FUNCTIONALISATION (EPOXIDATION) OF SILICONES AND USE OF SAID SILICONES AS NON-STICK COATINGS

(43) Date de publication de la demande: 31.05.2006
(73) Titulaire: Bluestar Silicones France, 69486 Lyon Cedex 03 (FR)
(72) Inventeur: DELARCHE, Jean-Pierre, F-69480 Lachassagne (FR); BREUNIG, Stefan, F-38200 Vienne (FR); STERIN, Sébastien, F-69450 St Cyr au Mont D'or (FR)
(74) Mandataire: Mekki, Boualem
(86) Numéro de dépôt international: PCT/FR2003/002650
(87) Numéro de publication internationale: WO 2005/028544

(56) Documents cités:
- EP-A- 0 262 642
- EP-A- 0 605 143
- EP-B- 0 578 354
- WO-A-97/47677
- US-A- 4 083 856
- US-A- 4 398 010
- US-B1- 6 365 696

## Description

Le domaine de l'invention est celui de la production de composés organosiliciés fonctionnalisés. Ces composés organosiliciés sont notamment des organosilanes et PolyOrganoSiloxanes (POS), sur lesquels sont greffés des radicaux fonctionnels, tels que par exemple des radicaux porteurs d'au moins une fonction époxy.

L'un des buts de la fonctionnalisation de silicone formée par des huiles POS, est d'améliorer leur capacité d'accrochage sur des supports en papier ou analogue, en polymère, en verre ou en métal. Ainsi, les huiles silicones fonctionnalisées époxy trouvent des applications intéressantes comme revêtements anti-adhérents pour supports souples, par exemple en papier ou en film polymère, ou comme lubrifiants.

Le greffage de tels radicaux fonctionnels s'opère par mise en oeuvre de précurseurs qui peuvent être du type de ceux porteurs d'au moins une insaturation, de préférence éthylénique, apte à réagir avec des motifs ≡Si-H appartenant à un organohydrogénosilane et/ou un POS hydrogéné. Les huiles silicones impliquées sont, par exemple celles de formules :
- Me₃SiO-(MeHSiO)ₙ-(Me₂SiO)ₘ- SiMe₃ dans laquelle Me = Méthyle, n et m sont des nombres entiers ou fractionnaires tel que 1≤ n≤ 1000 et 0 <m≤ 1000;
- Me₂HSiO-(MeHSiO)ₒ-(Me₂SiO)ₚ- SiHMe₂ dans laquelle o et p sont des nombres entiers ou fractionnaires tel que 0< o ≤ 1000 et 0 < p ≤ 1000.
De nombreux synthons peuvent fonctionnaliser les polyorganohydrogénosiloxanes ; par exemple, on utilise comme synthons des alcènes, des styrènes, des allylalcools, des allyloxyethers ou des allylamines.

La réaction d'hydrosilylation est classique dans le domaine de la fonctionnalisation des composés siliciés, et en particulier des POS. Elle est catalysée, en phase homogène ou hétérogène, par des catalyseurs organométalliques, notamment à base de métaux de transition (par exemple Karstedt : US-B-3 775 452).
Il existe cependant un problème lié à l'utilisation de catalyseurs organométalliques tels que le platine pour l'hydrosilylation de réactifs éthyléniquement insaturés et porteurs d'hétérocycles (e.g. époxy), par des motifs ≡Si-H portés par des composés organosiliciés tels que les huiles silicones.

En effet, ces catalyseurs d'hydrosilylation au platine ont pour effet secondaire indésirable de promouvoir l'ouverture des hétérocycles, ce qui génère une polymérisation/réticulation parasite impliquant de nombreuses fonctions hétérocycliques (en particulier époxides) et pouvant parfois conduire à la gélification complète du milieu réactionnel (formation de gommes ou de résines). Dans ces conditions, il est très difficile d'obtenir des produits finaux, à savoir des composés organosiliciés (silicones) fonctionnalisés présentant une viscosité parfaitement contrôlée. Une telle difficulté est particulièrement dommageable pour les huiles silicones fonctionnalisées destinées aux applications comme revêtements anti-adhérents.

A titre d'illustration de cette propriété indésirable qu'ont les catalyseurs au platine de rompre les hétérocycles, on peut citer la demande de brevet européen EP-A-0 415 243 dont le but est précisément d'exploiter cette propriété des catalyseurs au platine pour la polymérisation de composés hétérocycliques tels que les silicones époxy fonctionnels, les polymères acryliques époxy-fonctionnels ainsi que les monomères choisis dans le groupe comprenant les tétrahydrofuranes, les oxétanes, les lactones, les spirocarbonates, les spiroesters, les composés cyliques souffrés, les composés cycliques azotés.

Pour tenter de résoudre ce problème, diverses propositions techniques ont vu le jour.

Parmi elles, on peut distinguer celles faisant intervenir des catalyseurs organométalliques homogènes et celles concernant des systèmes catalytiques hétérogènes. S'agissant des propositions techniques en phase homogène présentées comme prévenant l'ouverture des fonctions hétérocycliques, en particulier époxydes, des précurseurs éthyléniques de greffage sur des silicones à motifs ≡Si-H, on peut citer le brevet US-B-5 258 480 qui divulgue un procédé pour la préparation de silicones époxy fonctionnelles au moyen d'un complexe catalytique d'hydrosilylation à base de rhodium {RhCl₃[(CH₃(CH₂)₃)₂S]₃ ; PtCl₂[(CH₃CH₂)₂S]₂} en phase homogène et en présence d'un stabiliseur constitué par une amine tertiaire [CH₃(C₁₈H₃₇)₂N].

Le document US-B-5 260 399 concerne la synthèse de monomères et de polymères époxysiloxanes par hydrosilylation en présence d'un catalyseur homogène comprenant un ligand phosphine et un complexe à base de métal de transition (platine, palladium, rhodium, iridium, fer ou cobalt) et ne contenant pas de phosphine.

Le document EP-A-0 574 265 concerne un procédé de préparation d'une composition époxysilicone réticulable par hydrosilylation d'un époxyde éthyléniquement insaturé, à l'aide d'un silicone contenant des motifs ≡Si-H, en présence d'un catalyseur homogène d'hydrosilylation au rhodium de formule :

[R₄M]+[RhCl₃Br]-

dans laquelle M = P ou N et R = radical organiqueC₁₋₁₈.

Le document EP-A-0 574 264 est relatif à la synthèse d'époxysilicones par hydrosilylation d'un époxyde éthyléniquement insaturé à l'aide d'un silicone contenant des motifs ≡Si-H, en présence d'un catalyseur homogène de type hexahaloplatinate d'ammonium de phosphonium ou d'orsonium quaternaire de formule :

(R₄M)₂PtX₆

dans laquelle M = As, P ou N ; X = halogène et R = radical organique C₁-₃₀.

Toutes ces propositions techniques en phase homogène n'apportent pas de solutions satisfaisantes au problème technique considéré. De plus, elles présentent les inconvénients des réactions en phase homogène. Ainsi, les huiles silicones fonctionnalisées obtenues à partir de procédés utilisant la catalyse homogène sont généralement colorées, de l'ordre de 120 à 300 hazen ; ce qui limite de ce fait leurs domaines envisageables d'utilisation, notamment dans le domaine de films transparents et anti-adhérents pour papier ou pour films transparents (par exemple de type polyester). Cette coloration est généralement due à la présence dans les huiles fonctionnalisées d'agrégats métalliques ou de colloïdes de taille nanométrique, dérivés des compositions catalytiques homogènes utilisées dans les procédés d'hydrosilylation de l'art antérieur. Dans ces cas, l'huile silicone nécessite des étapes supplémentaires de filtration et purification pour pouvoir être utilisable après réticulation dans le domaine des films transparents; ces étapes complémentaires rendent la mise en oeuvre industrielle onéreuse et donc peu viable économiquement.
Enfin, les complexes catalytiques mis en oeuvre dans ces propositions ont pour inconvénient d'être onéreux.
Pour s'affranchir des problèmes liés à la catalyse homogène, il est proposé dans le document WO-A-97/47677, une catalyse organométallique hétérogène permettant d'accéder à des huiles silicones fonctionnalisées époxydes, exemptes de tous résidus organométalliques après filtration. Ce procédé de préparation d'huiles silicones époxydes de faible coloration et de faible turbilité par hydrosilylation de POS hydrogénés avec des synthons insaturés et époxydés, en présence d'un métal (platine) déposé sur un support inerte, donne des résultats relativement satisfaisants en terme de maîtrise de la polymérisation cationique, par ouverture des cycles époxydes et donc de la gélification et de la viscosité du produit final.
Néanmoins, cette catalyse organométallique hétérogène reste perfectible notamment dans le cas particulier du 4-vinylcyclohexène-époxyde (VCMX).

Plus récemment, le brevet US-B-6 365 696 divulguait un procédé de préparation de POS époxydes, selon un processus d'hydrosilylation catalysé au platine entre un époxyde éthyléniquement insaturé tel que le VCMX et un POS hydrogéné du type MDD'M avec M = R₃-SiO_{1/2}, D = R₂-SiO_{2/2} ; D' = RH-SiO_{2/2} dans lesquels R = alkyle ; en présence de platine (solution d'acide chloroplatinique), d'un sel d'acide carboxylique (proprionate de sodium) et éventuellement d'un promoteur du catalyseur à savoir un alcool ou un acide carboxylique. L'alcool peut être du propylène glycol, du tétraéthylène glycol. Du carbonate de sodium peut être employé pour traiter le VCMX. Il est à noter que le procédé selon ce brevet est mis en oeuvre en l'absence d'eau.

Le document US 4,083,856 qui décrit un procédé similaire à celui de la présente invention, qui diffère cependant en ce que le catalyseur est supporté, et en ce que 500 à 5000 ppm d'eau sont présents.

Dans ce contexte, l'un des objectifs essentiels de la présence invention est de proposer un procédé de synthèse de composés organosiliciés fonctionnalisés, en particulier d'huiles silicones POS fonctionnalisés par des hétérocycles tels que des époxydes, par catalyse hétérogène, permettant de contrôler de façon optimiser la viscosité du produit final, c'est-à-dire de limiter les réactions parasites de polymérisation cationique par ouverture d'hétérocycles entraînant une gélification partielle ou totale du mélange réactionnel.

Un autre objectif essentiel de la présente invention est de proposer un procédé de synthèse d'organosilanes et/ou de POS fonctionnalisés par des hétérocycles et notamment des époxy, selon un processus d'hydrosilylation faisant intervenir un catalyseur hétérogène, et ce de façon fiable et reproductible.

Un autre objectif essentiel de la présente invention est de proposer un procédé de synthèse d'organosilanes et/ou de POS fonctionnalisés par des hétérocycles et notamment des époxy, selon un processus d'hydrosilylation faisant intervenir un catalyseur hétérogène, qui permet de réduire de façon très significative la coloration au sein du synthon insaturé.

Un autre objectif essentiel de l'invention est de proposer un procédé de synthèse d'organosilanes et/ou de POS fonctionnalisés par des hétérocycles et notamment des époxy, selon un processus d'hydrosilylation faisant intervenir un catalyseur hétérogène, permettant d'accéder à une large gamme d'huiles silicones fonctionnalisées tout en contrôlant la viscosité du produit final de manière stable en évitant toute gélification.

Un autre objectif essentiel de l'invention est de proposer un procédé de synthèse d'organosilanes et/ou de POS fonctionnalisés par des hétérocycles et notamment des époxy, selon un processus d'hydrosilylation faisant intervenir un catalyseur hétérogène, et ce de façon simple et économique.

Un autre objectif essentiel de l'invention est de proposer un procédé de synthèse d'organosilanes et/ou de POS fonctionnalisés par des hétérocycles et notamment des époxy, selon un processus d'hydrosilylation faisant intervenir un catalyseur hétérogène, les composés organosiliciés obtenus présentant une faible coloration et une faible turbilité, sans faire appel à un processus trop lourd de filtration ou de purification.

Un autre objectif essentiel de l'invention est de proposer un procédé de synthèse d'organosilanes et/ou de POS fonctionnalisés par des hétérocycles et notamment des époxy, selon un processus d'hydrosilylation faisant intervenir un catalyseur hétérogène, les produits silanes ou silicones fonctionnalisés obtenus ayant une viscosité basse, par exemple inférieure ou égale à 50 mPa.s à 25°C, pour les produits obtenus à partir du tétraméthylhydrogénodisiloxane (M'₂).

Un autre objectif essentiel de la présente invention est de fournir des composés organosiliciés fonctionnalisés par des radicaux porteurs d'hétérocycles, en particulier des époxydes, qui soient peu ou pas polymérisés/réticulés par ouverture d'hétérocycles.

Un autre objectif essentiel de la présente invention est de fournir des huiles silicones POS fonctionnalisées époxydes de viscosité basse et contrôlée, de nature variée, peu ou pas trouble, peu ou pas colorée, économique, stable et simple à obtenir.

Un autre objectif essentiel de l'invention est de fournir un vernis, une encre ou un revêtement silicone anti-adhérent accrochant bien sur tous types de supports et constitué par les huiles fonctionnalisées époxydes ayant les qualités sus-évoquées, notamment la fluidité.

Ces objectifs parmi d'autres sont atteints par la présente invention qui concerne tout d'abord un procédé de fonctionnalisation d'au moins un composé organosilicié porteur d'au moins un motif ≡Si-H par molécule, par hydrosilylation d'au moins un synthon porteur d'au moins une insaturation (de préférence éthylénique) contenant au moins un hétérocycle dans lequel l'hétéroatome est de préférence l'oxygène, ladite hydrosilylation étant effectuée en présence d'une composition catalytique hétérogène comprenant au moins un métal qui est choisi dans le groupe comprenant : cobalt, rhodium, ruthénium, platine et nickel et qui est déposé sur un support inerte, caractérisé en ce que l'hydrosilylation est effectuée en présence d'au moins une base non nucléophile inorganique et d'eau dans une quantité comprise entre 500 et 5000 ppm, par rapport à la masse totale de synthon et de composé organosilicié.

Il est du mérite des inventeurs d'avoir pu mettre en évidence que l'addition d'une base non nucléophile inorganique (notamment de type hydrogénocarbonate) conjointement au catalyseur d'hydrosilylation supporté et éventuellement en présence d'eau, permet de préparer de façon fiable, reproductible, simple et économique des huiles silicones fonctionnelles particulièrement intéressantes, notamment en termes de viscosité, laquelle est avantageusement basse et contrôlée.

Ce procédé de synthèse par catalyse hétérogène permet d'accéder à des huiles silicones fonctionnalisées transparentes et fluides, parfaitement adaptées pour la réalisation de revêtements anti-adhérents notamment sur papier ou film polymère, obtenus après réticulation cationique sous activation thermique et/ou actinique (UV).

Au sens du présent exposé, le terme *"composition catalytique hétérogène"* désigne une composition catalytique pouvant être solide ou liquide qui est non dissoute dans le milieu réactionnel, i.e. le milieu réactionnel comporte au moins deux phases dont l'une est formée par la composition catalytique.

Selon un mode préféré de mise en oeuvre, la base non nucléophile inorganique est sélectionnée dans le groupe comprenant : les hydrogénocarbonates ou les carbonates de métaux alcalins (de préférence de sodium ou de potassium), les phosphates de métaux alcalins (de préférence de sodium ou de potassium), les sulfates de métaux alcalins (de préférence de sodium ou de potassium) et leurs mélanges.
Il peut s'agir par exemple de H₂PO₄Na, HPO₄Na₂, Na₂CO₃, NaHCO₃, KHCO₃.
En d'autres termes, la base non nucléophile inorganique doit avoir un pK_{A} tel qu'aux concentrations d'usage inférieures à 5 %, le pH du milieu soit avantageusement compris entre 6 et 12, de préférence entre 4 et 9.

Par ces dispositions avantageuses, l'invention permet d'obtenir des huiles silicones fonctionnalisées (e.g. époxydées) de basse viscosité et ayant subi une perte en fonctions (e.g. époxydes) inférieure à 20 % en nombre.

Selon une disposition préférée de l'invention, le procédé de fonctionnalisation comprend au moins une étape de dévolatilisation, mise en oeuvre après l'hydrosilylation et en présence d'au moins une base non nucléophile inorganique.
Cette étape de dévolatilisation est avantageusement réalisée après élimination par filtration du système catalytique. Elle est destinée à éliminer les composés légers du milieu réactionnel. La mise en oeuvre d'au moins une base non nucléophile inorganique à ce stade, a notamment pour intérêt de conduire à des produits peu ou pas colorés et de viscosité plus basse.

Sur le plan quantitatif, il est apparu préférable, lors de l'hydrosilylation ou de la dévolatilisation, de mettre en oeuvre une quantité de base non nucléophile inorganique comprise entre 1 et 10.000 ppm, de préférence entre 10 et 5.000, et, plus préférentiellement encore entre 100 et 4.000 par rapport à la masse totale de synthon et de composé organosilicié.
Selon l'invention, l'eau est un auxiliaire réactionnel, présente lors de l'hydrosilylation, dans une quantité comprise entre 500 et 5.000 ppm, par rapport à la masse totale de synthon et de composé organosilicié.
Cette eau concourt de manière significative aux performances du catalyseur hétérogène en termes de pertes limitées en greffons de fonctionnalisation et donc de viscosité réduite. Cette eau peut être présente initialement dans le milieu réactionnel et/ou être rajoutée par la suite en cours de procédé.
Elle peut être apportée au milieu réactionnel directement ou indirectement par l'intermédiaire des produits mis en oeuvre. C'est ainsi que le catalyseur peut par exemple être hydraté et contenir 50% d'eau.

De préférence, le métal de la composition catalytique est le platine.

La quantité de métal contenu dans la composition catalytique hétérogène est comprise entre 0,005% et 5% par rapport au poids du support inerte. Cette quantité de métal est également comprise entre 1 et 1000 ppm par rapport au poids de l'huile silicone.
Le métal est déposé sur des supports inertes variés tels que le noir de carbone, le charbon, l'alumine, la silice traitée ou non traitée, le sulfate de baryum ou encore des silicones réticulées. Avantageusement, la taille granulométrique des supports catalytiques est supérieure à 10 µm afin d'avoir une bonne filtrabilité ne nécessitant pas d'adjuvants de filtration. Ainsi, cette granulométrie est telle que l'on peut réduire considérablement le temps de filtration.

Selon une caractéristique remarquable de l'invention, les synthons contiennent au moins un cycle hydrocarboné dans lequel est inclus un atome d'oxygène, et ont pour formule :
■ (1) 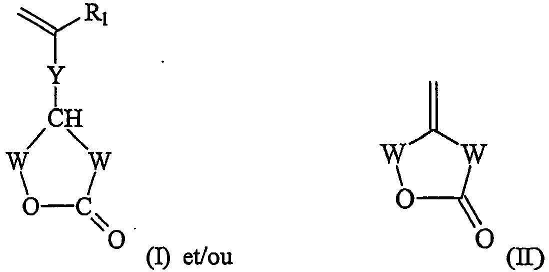 dans lesquelles :
   ■ les symboles W sont identiques ou différents et correspondent à un radical hydrocarboné divalent choisi parmi les radicaux alkylènes linéaires ou ramifiés ayant de 1 à 12 atomes de carbone, un des symboles W pouvant être une valence libre;
   ■ le symbole Y correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   ■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 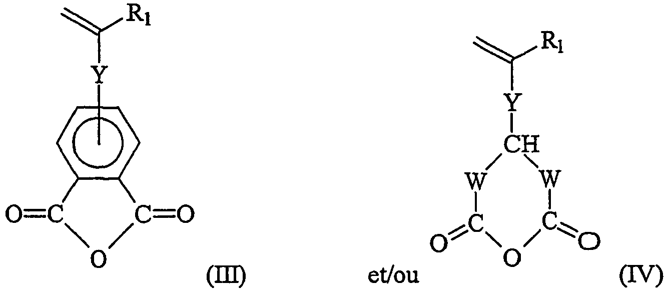 dans lesquelles :
   ■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
   ■ le symbole **Y** correspond à une valence libre ou un radical divalent choisi parmi les radicaux alkylènes linéaires ou ramifiés ayant de 1 à 12 atomes de carbone et pouvant contenir un hétéro-atome, de préférence un atome d'oxygène;
   ■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (3) 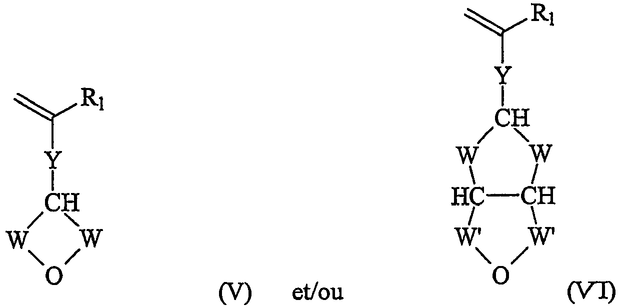 dans lesquelles :
   ■ les symboles **W** sont identiques ou différents et correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **W** pouvant être une valence libre pour (V) et les deux symboles **W** peuvent être simultanément une valence libre pour (VI);
   ■ les symboles **W'** sont identiques ou différents et correspondent à un radical hydrocarboné divalent choisi parmi les radicaux alkylènes linéaires ou ramifiés ayant de 1 à 12 atomes de carbone; au moins un des symboles **W'** pouvant être une valence libre;
   ■ le symbole **Y** correspond à une valence libre ou un radical divalent choisi parmi les radicaux alkylènes linéaires ou ramifiés ayant de 1 à 12 atomes de carbone et pouvant contenir un hétéro-atome, de préférence un atome d'oxygène;
   ■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ et (4) 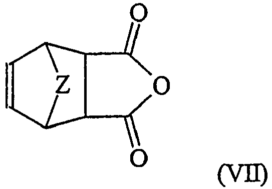 dans laquelle :
   ■ les symboles **W** sont identiques ou différents et correspondent à une valence libre et un radical hydrocarboné divalent choisi parmi les radicaux alkylènes linéaires ou ramifiés ayant de 1 à 2 atomes de carbone;
   ■ le symbole **Z** correspond à un radical divalent choisi parmi un atome de carbone ou un hétéroatome.

De préférence, le cycle hydrocarboné dans lequel est inclus l'atome d'hydrogène comporte au plus 8 atomes dans ledit cycle. De plus, on obtient les meilleurs résultats en accord avec le procédé d'hydrosilylation de l'invention avec des synthons ne contenant qu'un cycle hydrocarboné dans lequel est inclus un atome d'oxygène. En particulier, les synthons utilisés et donnant de bons résultats (voir exemples ci-dessous) ont pour formule : 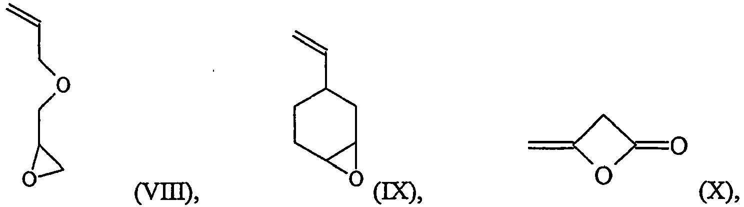 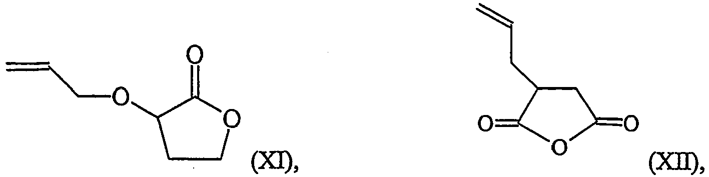 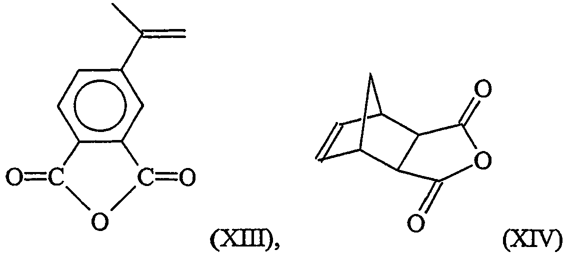 et

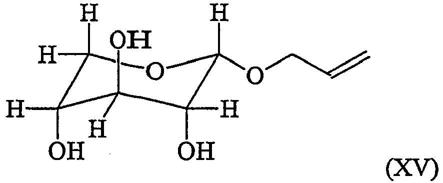

En général, les synthons réagissant avec l'huile silicone sont des synthons identiques. Le rapport molaire de l'huile silicone/ synthons est compris entre 0,01 et 100, de préférence entre 0,1 et 10.

Conformément à l'invention, le composé organosilicié à motifs ≡Si-H est un silane époxydé ou un polyorganosiloxane (POS) époxydé.

Ce dernier peut être avantageusement formé par une huile silicone linéaire ou cyclique et de formule correspondant à l'une des formules moyennes suivantes : 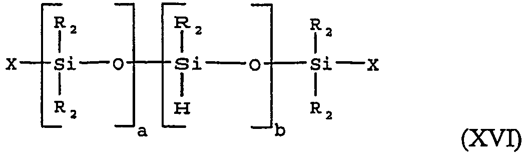 et/ou 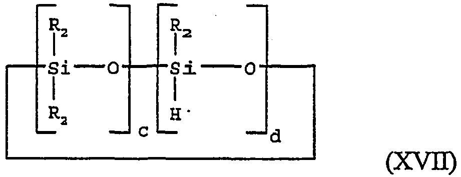 dans lesquelles :
■ les symboles **R₂** sont identiques ou différents et correspondent à un radical hydrocarboné monovalent choisi parmi le radical phényle et les radicaux alkyles linéaires ou ramifiés ayant de 1 à 6 atomes de carbone;
■ les symboles **X** sont identiques ou différents et correspondent à un radical monovalent choisi parmi **R₂**, un atome d'hydrogène, un radical méthoxy, et un radical éthoxy;
■ a et b sont des nombres entiers ou fractionnaires, tels que :
   - 0 < a ≤ 200, de préférence 0 < a ≤ 99
   - 0 ≤ b ≤ 200, de préférence 1 < b ≤ 100, et au moins un des deux X correspondant au radical hydrogène si b = 0
   - 5 < a+b ≤ 200, de préférence 10 < a+b ≤ 100
■ c et d sont des nombres entiers ou fractionnaires, tels que :
   - 0 < c < 5, de préférence 0 < c < 3
   - 1 < d < 10, de préférence 1 < d < 5
   - 3 < a+b < 10, de préférence 3 < a+b < 5.

Dans le cadre de l'invention, différents types de compositions catalytiques hétérogènes sont utilisables.

A titre d'exemples non limitatifs, on peut utiliser du platine sur noir de carbone ou charbon tel que la composition catalytique contenant 2,5% de platine en poids déposé sur le support CECA 2S développé par la société CECA, ou la composition catalytique 88 231 (1% Pt) de la société Heraeus. Dans ce cas, le platine peut être déposé sur ce type de support par dépôt d'acide chloroplatinique suivi d'une neutralisation et d'une réduction. De même, l'utilisation de platine sur alumine de préférence de type α tel que la composition catalytique CAL 101 (0,3% de Pt, support SCS9 constitué de α-alu-mine) commercialisée par la société Procatalyse ou la composition catalytique 88 823 de la société Heraeus (0,5% de Pt sur α-alumine) donne de bons résultats.

Selon une caractéristique remarquable de l'invention, l'huile silicone et le synthon réagissent dans le milieu réactionnel en l'absence de solvant.

Le procédé selon l'invention peut être mis en oeuvre selon diverses variantes. En pratique, l'ensemble des réactifs et de la composition catalytique est mélangé dans le milieu réactionnel (type "batch").

Dans le cadre de ses essais expérimentaux, la Demanderesse a mis au point un procédé avantageux en accord avec la première mise en oeuvre. Ce procédé d'hydrosilylation entre une huile silicone et un synthon insaturé comporte les étapes suivantes :
(a) le synthon est introduit dans le milieu réactionnel;
(b) une quantité de 5 à 5000 ppm, de préférence de 10 à 100 ppm, de composition catalytique hétérogène par rapport à la masse totale des réactifs est introduite sous gaz inerte dans le milieu réactionnel;
(c) une quantité de 500 à 5000 ppm d'eau est introduite dans le milieu réactionnel;
(d) la base non nucléophile inorganique (de préférence l'hydrogénocarbonate de sodium) est introduite dans le milieu réactionnel;
   l'ordre des étapes a, b, c, d pouvant être mises en oeuvre dans l'ordre ou dans le désordre;
(e) ledit milieu est chauffé à une température comprise entre 25°C et 200°C, et de préférence entre 50°C et 160°C;
(f) l'huile silicone est ensuite introduite sur une durée comprise 0 et 24 heures, de préférence entre 2,5 et 5 heures; le rapport molaire synthon/silicone étant compris entre 1 et 5, de préférence entre 1 et 2;
(g) la masse réactionnelle est ensuite filtrée afin de séparer la composition catalytique hétérogène et l'huile silicone fonctionnalisée,
(h) l'huile silicone fonctionnalisée est finalement dévolatilisée en présence d'une base non nucléophile inorganique identique ou différente de celle visée ci-dessus (de préférence identique), et
(i) la masse réactionnelle est finalement soumise à au moins une opération d'élimination des résidus solides du milieu réactionnel (de préférence par filtration ou par gravité), de manière à récupérer l'huile silicone fonctionnalisée.

Ce procédé avantageux peut être effectué en masse, ce qui signifie que la réaction entre l'huile silicone et le synthon s'effectue en l'absence de solvant. Toutefois, de nombreux solvants tels que le toluène, le xylène, l'octaméthyltétrasiloxane, le cyclohexane ou l'hexane peuvent être utilisés.

D'autre part, la quantité molaire de synthon introduite lors de l'étape (a) est inférieure à celle qui est utilisée pour un procédé classique de l'art antérieur. Avantageusement, le rapport molaire synthon/huile silicone est compris entre 1 et 1,1 et ceci sans nuire à la qualité des huiles fonctionnalisées obtenues et au rendement de la réaction.

L'étape (g) de filtration permet, le cas échéant d'éliminer toute trace de turbidité de l'huile silicone fonctionnalisée obtenue. D'autre part, la composition catalytique hétérogène peut être récupérée puis réutilisée de nouveau, sans nécessiter de régénération, avec ou sans lavage, et sans que l'on note de baisse d'activité sensible de ses performances.

Les huiles silicones fonctionnalisées obtenues en accord avec l'invention, et notamment selon le procédé avantageux mis au point, sont très stables et ne subissent pas de modifications lors de l'étape de dévolatilisation. Leurs viscosités sont très sensiblement moins élevées par rapport à celles des huiles obtenues à partir des mêmes réactifs et selon les procédés de l'art antérieur, notamment ceux utilisant des catalyseurs homogènes.

Par exemple, la viscosité des huiles de formule (XVI) avec a = 0, b = 0 et X = H et R₂ = CH₃, fonctionnalisée avec du 1,2-époxy-4-vinyl-cyclohexane, obtenues en présence de NaHCO₃, est de l'ordre de 20 à 30 mPa.s ; ce qui traduit l'absence d'ouverture des cycles contenant un atome d'oxygène et donc l'absence de réactions de polymérisation, y compris pendant la dévolatilisation, due à l'ouverture de ces cycles.

De plus, les huiles obtenues en accord avec les procédés selon l'invention sont quasi transparentes avec une coloration très faible, généralement inférieure à 50 Hazen.

Ces huiles ont également une teneur très faible en métal issu de la composition catalytique; ce qui limite très fortement les réactions indésirables que pourraient provoquer le métal si sa teneur était plus importante. Par exemple, dans le cas d'huiles obtenues selon l'invention en présence d'une composition catalytique contenant notamment du platine, il est possible de mélanger lesdites huiles avec d'autres molécules contenant des fonctions ≡SiH et des molécules contenant des liaisons insaturées sans risquer de nouvelle réaction d'hydrosilylation entre ces molécules.

Le taux d'époxy dosé des huiles obtenues selon l'invention est très élevé et le rapport taux d'époxy dosé/ taux d'époxy théorique est compris entre 0,95 et 1, ce taux d'époxy théorique correspondant au taux de ≡SiH dosé sur l'huile avant réaction.

Ce composé organosilicié fonctionnalisé est avantageusement sélectionné parmi les organosilanes et/ou les huiles POS époxydés.

Cet époxysilane ou cette huile POS époxydée présente les avantages des produits obtenus selon le procédé de l'invention, à savoir basse viscosité (fluidité) adaptée à l'enduction (à grande vitesse) de supports souples notamment papier ou film polymère, transparence, ainsi qu'à des applications à tire de lubrifiants.

Ces produits fonctionnalisés se singularisent également par l'absence ou la quasi-absence en leur sein, de polymères résultant d'une polymérisation par ouverture des hétérocycles des radicaux de fonctionnalisation.

Selon un autre de ses aspects, l'invention concerne l'utilisation des huiles silicones telles que définies ci-dessus en tant que telles ou au travers de leur procédé d'obtention comme lubrifiants ou pour la préparation de revêtements anti-adhérents pour supports, notamment des supports souples, par exemple en papier, verre, en film polymère notamment plastique, ou en métal.

### EXEMPLES

Le 4-vinylcyclohexène-époxyde (VCMX) utilisé dans les exemples qui suivent provient de la société Union Carbide. Il est systématiquement distillé avant utilisation.
Le tétraméthylhydrogénodisiloxane (M'₂) utilisé est fabriqué par Rhodia Silicones. Il est lui aussi distillé avant utilisation.
Le catalyseur Pt sur Noir de Carbone humide est disponible auprès de la société Aldrich sous la référence 33,015-9. Le taux de Platine est de 2,5% en poids. Le taux d'humidité est de 50% en poids environ.
L'auxiliaire de fonctionnalisation utilisé est d'hydrogénocarbonate de sodium (NaHCO₃). Les quantités de catalyseur, de NaHCO₃ et d'eau sont exprimées par rapport à la masse totale de VCMX et de M'₂.
Le dosage des fonctions époxydes est réalisé par potentiométrie. L'appareil utilisé est de marque Mettler^{®}, modèle DL21, équipé d'une électrode combinée Mettler Toledo DG 113 SC LiCl/EtOH 1,0M. La solution titrante est une solution d'acide perchlorique 0,1N dans l'acide acétique.

### Protocole opératoire commun pour les exemples 1 à 5 et les contre-exemples 1 et 2 :

Dans un réacteur de 100 ml, sont chargés 66 g (531 mmol = 1,05 éq) de VCMX, la quantité de platine nécessaire sous forme du catalyseur Pt sur noir de carbone et éventuellement l'eau et l'hydrogénocarbonate de sodium. Le mélange réactionnel est ensuite chauffé à 90°C. 34 g (506 mmol = 1 éq) de M'₂ sont alors coulés goutte à goutte en 5 h dans le réacteur. Lors de la synthèse, l'avancement de la réaction est déterminé par la disparition des motifs ≡SiH et l'éventuelle disparition des fonctions époxy est suivie par dosage potentiométrique. Lorsque tous les motifs ≡SiH ont réagi, le mélange réactionnel est filtré puis dévolatilisé pendant 7 heures sous vide à haute température en présence ou non d'hydrogénocarbonate de sodium. La viscosité, qui est directement corrélée à la perte en fonctions époxydes, est mesurée avant et après dévolatilisation.

### Protocole opératoire le contre-exemple 3 :

Dans un réacteur de 100 ml, sont chargés 66 g (531 mmol = 1,05 éq) de VCMX et la quantité de platine nécessaire sous la forme du catalyseur de Karstedt. Le mélange réactionnel est ensuite chauffé à 90°C. 34 g (506 mmol = 1 éq) de M'₂ sont alors coulés goutte à goutte dans le réacteur. Le mélange réactionnel gélifie durant la coulée du M'₂.

### Protocole opératoire pour le contre-exemple 4 :

Dans ce contre-exemple, on réalise, conformément à l'enseignement de l'US-B-6 365 696, une fonctionnalisation de M'₂ avec du VCMX selon un processus de catalyse homogène en faisant intervenir de l'acétate de Sodium, à titre de catalyseur.
Dans un réacteur de 100 ml, sont chargés 66 g (531 mmol = 1,05 éq) de VCMX, la quantité de platine nécessaire sous la forme du catalyseur de Karstedt et l'acétate de sodium. Le mélange réactionnel est ensuite chauffé à 90°C. 34 g (506 mmol = 1 éq) de M'₂ sont alors coulés goutte à goutte en 5 h dans le réacteur. Lors de la synthèse, l'avancement de la réaction est déterminé par la disparition des motifs ≡SiH et l'éventuelle disparition des fonctions époxy est suivie par dosage potentiométrique. Lorsque tous les motifs ≡SiH ont réagi, le mélange réactionnel est filtré. La viscosité déjà élevée en fin de réaction montre qu'une partie des fonctions époxy ont polymérisé (perte estimée à 7,9 %).

L'ensemble des résultats obtenus lors des synthèses et lors des dévolatilisations est résumé dans le tableau ci-dessous. Ces exemples montrent que ce procédé incluant une étape de synthèse selon une catalyse hétérogène en présence d'une quantité suffisante d'eau et d'une espèce de base non nucléophile inorganique de type hydrogénocarbonate suivie d'une étape de dévolatilisation de préférence en présence là encore d'une espèce de type hydrogénocarbonate permet d'obtenir des huiles silicones d'une qualité qu'il est particulièrement difficile d'atteindre par un autre procédé. Notamment, les procédés utilisant une catalyse homogène laissent dans le milieu des résidus métalliques qui sont de nature à dégrader la qualité du produit au cours du temps à moins de réaliser une étape supplémentaire, souvent longue et fastidieuse, d'élimination du catalyseur.

| | **Synthèse** | | | | | | **Dévolatilisation** | | |
|---|---|---|---|---|---|---|---|---|---|
| | **Pt (ppm)** | **Base (ppm)** | **H₂O rajoutée (ppm)** | **t_{(TTSiH=100%)} (heures)** | **perte époxy** | **viscosité (mPa/s)** | **NaHCO₃ (ppm)** | **T (°C)** | **viscosité (mPa/s)** |
| **Ex 1** | 8 | 500 | 500 | 9 | < 1% | 30 | / | 120 | 58 |
| **Ex 2** | 8 | 2500 | 2500 | 9 | < 1% | 26 | 1000 | 110 | 37 |
| **Ex 3** | 20 | 2500 | 2500 | 7 | < 1% | 27 | 2500 | 130 | 36 |
| **Ex 4** | 20 | 2500 | / | 7 | 2,3% | 31 | 2500 | 130 | 42 |
| **Ex 5** | 20 | 2500 | 2500 | 7 | <1% | 26 | / | 130 | 70 |
| **C.Ex 1** | 8 | / | / | / | gélification lors de la coulée du M'₂ | | / | / | / |
| **C.Ex 2** | 8 | 100 | 100 | (i) | 10% | 570 | Mélange réactionnel non dévolatilisé compte tenu de la viscosité déjà très élevée en fin de synthèse | | |
| **C.Ex 3** | 20 | / | / | / | gélification lors de la coulée du M'₂ | | / | / | / |
| **C.Ex 4** | 20 | 2500 | / | 7 | 7,9% | 124 | Mélange réactionnel non dévolatilisé compte tenu de la viscosité déjà très élevée en fin de synthèse. | | |

| | | | | | | | | | |
|---|---|---|---|---|---|---|---|---|---|
| (i) réaction stoppée à t = 7 h (TT_{SiH} = 98,4%) compte tenu de la perte époxy mesurée | | | | | | | | | |

### Commentaires:

Les exemples 1 à 5 montrent qu'en présence de la base nucléophile inorganique (NaHCO₃) et d'eau, les pertes en époxy sont très limitées. Il n'y a donc pas de polymérisation/réticulation indésirable.
Il est également à noter que la viscosité des huiles époxydées obtenues dans les exemples 1 à 5 selon l'invention, est très basse. Cette dernière est encore plus basse lorsque ? de manière préférée, on met en oeuvre de l'eau (exemples 1 à 3 et 5).
Il ressort des exemples 1 et 5 et des exemples 2 à 4, que la présence de la base nucléophile inorganique lors de la dévolatisation a un effet positif sur la limitation de l'accroissement de la viscosité du silicone fonctionnalisé époxy, habituellement observée lors de cette étape.
Le contre-exemple 2 montre que pour un taux réduit (100 ppm) de base nucléophile inorganique (NaHCO₃), on n'obtient pas les résultats escomptés en termes de taux d'époxy et de viscosité.
Le contre-exemple 4 correspond au procédé selon le document US-B--6 365 696 (phase homogène, catalyseur basique : acétate de Na), montre que la mise en oeuvre d'une base qui n'est pas une base inorganique non nucléophile à titre de catalyseur, donne de mauvais résultats en ce qui concerne la perte en époxy et la viscosité.

## Revendications

1. Procédé de fonctionnalisation d'au moins un composé organosilicié porteur d'au moins un motif ≡Si-H par molécule, par hydrosilylation d'au moins un synthon porteur d'au moins une insaturation (de préférence éthylénique) contenant au moins un hétérocycle dans lequel l'hétéroatome est de préférence l'oxygène, ladite hydrosilylation étant effectuée en présence d'une composition catalytique hétérogène comprenant au moins un métal qui est choisi dans le groupe comprenant : cobalt, rhodium, ruthénium, platine et nickel et qui est déposé sur un support inerte, **caractérisé en ce que** l'hydrosilylation est effectuée en présence d'au moins une base non nucléophile inorganique et d'eau dans une quantité comprise entre 500 et 5000 ppm, par rapport à la masse totale de synthon et de composé organosilicié.

2. Procédé selon la revendication 1, **caractérisé en ce que** la base non nucléophile inorganique est sélectionnée dans le groupe comprenant : les hydrogénocarbonates ou les carbonates de métaux alcalins (de préférence de sodium ou de potassium), les phosphates de métaux alcalins (de préférence de sodium ou de potassium), les sulfates de métaux alcalins (de préférence de sodium ou de potassium) et leurs mélanges.

3. Procédé selon la revendication 1 ou 2, **caractérisé en ce qu'**il comprend au moins une étape de dévolatilisation, mise en oeuvre après l'hydrosilylation et en présence d'au moins une base non nucléophile inorganique.

4. Procédé selon la revendication 3, **caractérisé en ce que**, lors de l'hydrosilylation ou de la dévolatilisation, on met en oeuvre une quantité de base non nucléophile inorganique comprise entre 1 et 10000 ppm, de préférence entre 10 et 5000, et, plus préférentiellement encore entre 100 et 4000 par rapport à la masse totale de synthon et de composé organosilicié.

5. Procédé selon l'une quelconque des revendications 1 à 4, **caractérisé en ce que** les synthons contiennent au moins un cycle hydrocarboné dans lequel est inclus un atome d'oxygène, les synthons ayant pour formule :
■ (1) 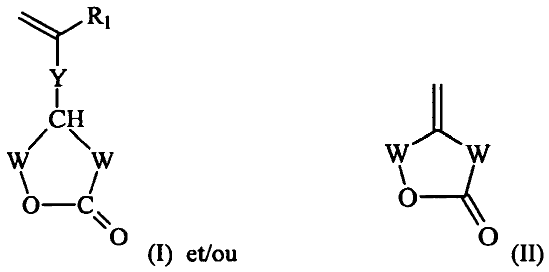 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 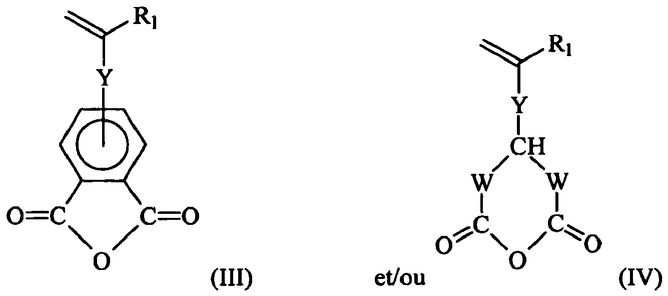 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone, un des symboles **W** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (3) 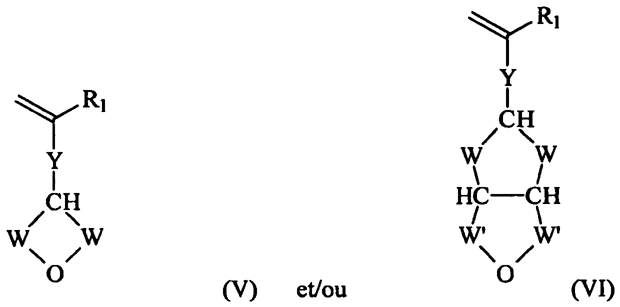 dans lesquelles :
■ les symboles **W** sont identiques ou différents et correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **W** pouvant être une valence libre pour (V) et les deux symboles **W** peuvent être simultanément une valence libre pour (VI);
■ les symboles **W'** sont identiques ou différents et correspondent à un radical hydrocarboné divalent choisi parmi les radicaux alkylènes linéaires ou ramifiés ayant de 1 à 12 atomes de carbone; au moins un des symboles **W'** pouvant être une valence libre;
■ le symbole **Y** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
■ le symbole **R₁** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ et (4) 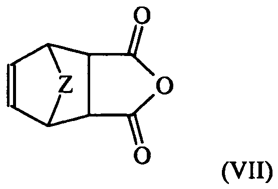 dans laquelle :
■ les symboles **W** sont identiques ou différents et correspondent à une valence libre et un radical hydrocarboné divalent choisi parmi les radicaux alkylènes linéaires ou ramifiés ayant de 1 à 2 atomes de carbone;
■ le symbole **Z** correspond à un radical divalent choisi parmi un atome de carbone ou un hétéroatome.

6. Procédé selon l'une quelconque des revendications 1 à 5, **caractérisé en ce que** le composé organosilicié à motifs ≡Si-H est un silane époxydé ou un polyorganosiloxane (POS) époxydé.

7. Procédé d'hydrosilylation selon l'une quelconque des revendications 1 à 6, **caractérisé en ce que** le composé organosilicié à motifs ≡Si-H est un polyorganosiloxane (POS) époxydé formé par une huile silicone linéaire ou cyclique et de formules moyennes : 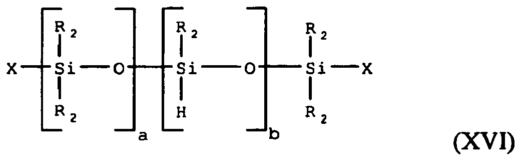 et/ou 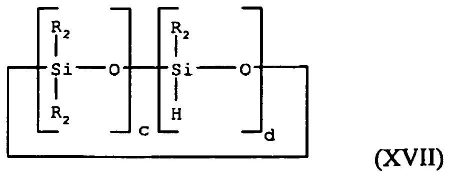 dans lesquelles :
■ les symboles **R₂** sont identiques ou différents et correspondent à un radical hydrocarboné monovalent choisi parmi le radical phényle et les radicaux alkyles linéaires ou ramifiés ayant de 1 à 6 atomes de carbone;
■ les symboles **X** sont identiques ou différents et correspondent à un radical monovalent choisi parmi **R₂**, un atome d'hydrogène, un radical méthoxy, et un radical éthoxy;
■ a et b sont des nombres entiers ou fractionnaires, tels que :
- 0 < a≤ 200, de préférence 0 < a ≤ 99
- 0 ≤ b ≤ 200, de préférence 1 < b ≤ 100, et au moins un des deux **X** correspondant au radical hydrogène si b = 0
- 5 < a+b ≤ 200, de préférence 10 < a+b ≤ 100
■ c et d sont des nombres entiers ou fractionnaires, tels que :
- 0 < c < 5, de préférence 0 < c < 3
- 1 < d < 10, de préférence 1 < d < 5
- 3 < a+b < 10, de préférence 3 < a+b < 5.

8. Procédé d'hydrosilylation selon l'une quelconque des revendications 1 à 7, **caractérisé en ce que** la quantité de métal est comprise entre 0,1% et 5% par rapport au poids du support inerte.

9. Procédé d'hydrosilylation selon l'une quelconque des revendications 1 à 8, **caractérisé en ce que** la quantité de métal de la composition catalytique est comprise entre 1 et 1000 ppm par rapport au poids de l'huile silicone.

10. Procédé d'hydrosilylation selon l'une quelconque des revendications 1 à 9, **caractérisé en ce que** le métal de la composition catalytique est le platine.

11. Procédé d'hydrosilylation selon l'une quelconque des revendications 1 à 10, **caractérisé en ce que** le support inerte est sélectionné parmi le groupe comprenant le noir de carbone, le charbon, l'alumine, le silicate et l'oxyde de baryum.

12. Procédé d'hydrosilylation selon l'une des revendications 7 à 11 d'une huile silicone avec un synthon selon l'une des revendications précédentes, **caractérisé en ce qu'**il comporte les étapes suivantes :
a) le synthon est introduit dans le milieu réactionnel;
b) une quantité de 5 à 5000 ppm, de préférence de 10 à 100 ppm, de composition catalytique hétérogène par rapport à la masse totale des réactifs est introduite sous gaz inerte dans le milieu réactionnel;
c) une quantité de 500 à 5000 ppm d'eau est introduite dans le milieu réactionnel;
d) la base non nucléophile inorganique est introduite dans le milieu réactionnel;
l'ordre des étapes a, b, c, d pouvant être mises en oeuvre dans l'ordre ou dans le désordre;
e) ledit milieu est chauffé à une température comprise entre 25°C et 200°C, et de préférence entre 50°C et 160°C;
f) l'huile silicone est ensuite introduite sur une durée comprise 0 et 24 heures, de préférence entre 2,5 et 5 heures; le rapport molaire synthon/silicone étant compris entre 1 et 5, de préférence entre 1 et 2;
g) la masse réactionnelle est ensuite filtrée afin de séparer la composition catalytique hétérogène et l'huile silicone fonctionnalisée,
h) l'huile silicone fonctionnalisée est finalement dévolatilisée en présence d'une base non nucléophile inorganique identique ou différente de celle visée ci-dessus (de préférence identique); et
i) la masse réactionnelle est finalement soumise à au moins une opération d'élimination des résidus solides du milieu réactionnel (de préférence par filtration ou par gravité), de manière à récupérer l'huile silicone fonctionnalisée.

13. Procédé selon l'une quelconque des revendications 1 à 12, **caractérisé en ce que** l'huile silicone et le synthon réagissent dans le milieu réactionnel en l'absence de solvant.

14. Utilisation des huiles silicones obtenues par le procédé selon l'une quelconque des revendications 7 à 13 comme lubrifiants pour la préparation de revêtements anti-adhérents pour supports, notamment des supports souples.

## Patentansprüche

1. Verfahren zur Funktionalisierung mindestens einer Organosiliciumverbindung mit mindestens einer ≡Si-H-Einheit pro Molekül durch Hydrosilylierung mindestens eines Synthons mit mindestens einer (vorzugsweise ethylenischen) Ungesättigtheit, das mindestens einen Heterocyclus, in dem es sich bei dem Heteroatom vorzugsweise um Sauerstoff handelt, enthält, wobei die Hydrosilylierung in Gegenwart einer heterogenen Katalysatorzusammensetzung, die mindestens ein Metall, das aus der Gruppe umfassend Cobalt, Rhodium, Ruthenium, Platin und Nickel ausgewählt ist und auf einem inerten Träger abgeschieden ist, umfasst, durchgeführt wird, **dadurch gekennzeichnet, dass** die Hydrosilylierung in Gegenwart von mindestens einer anorganischen nichtnucleophilen Base und Wasser in einer Menge zwischen 500 und 5000 ppm, bezogen auf die Gesamtmasse von Synthon und Organosiliciumverbindung, durchgeführt wird.

2. Verfahren nach Anspruch 1, **dadurch gekennzeichnet, dass** die anorganische nichtnucleophile Base aus der Gruppe umfassend Hydrogencarbonate oder Carbonate von Alkalimetallen (vorzugsweise von Natrium oder von Kalium), Phosphaten von Alkalimetallen (vorzugsweise von Natrium oder von Kalium), Sulfate von Alkalimetallen (vorzugsweise von Natrium und von Kalium) und Mischungen davon ausgewählt wird.

3. Verfahren nach Anspruch 1 oder 2, **dadurch gekennzeichnet, dass** es mindestens einen Entgasungsschritt aufweist, der nach der Hydrosilylierung in Gegenwart von mindestens einer anorganischen nichtnucleophilen Base durchgeführt wird.

4. Verfahren nach Anspruch 3, **dadurch gekennzeichnet, dass** man bei der Hydrosilylierung oder der Entgasung eine Menge an anorganischer nichtnucleophiler Base zwischen 1 und 10.000 ppm, vorzugsweise zwischen 10 und 5000 und noch weiter bevorzugt zwischen 100 und 4000, bezogen auf die Gesamtmasse von Synthon und Organosiliciumverbindung, durchführt.

5. Verfahren nach einem der Ansprüche 1 bis 4, **dadurch gekennzeichnet, dass** die Synthone mindestens einen Kohlenwasserstoffring, in dem ein Sauerstoffatom enthalten ist, enthalten, wobei die Synthone die folgende Formel aufweisen:
■ **(1)** 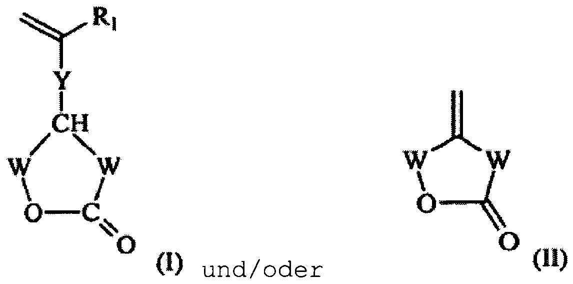 worin:
■ die Symbole **W** gleich oder verschieden sind und für einen zweiwertigen Kohlenwasserstoffrest, der aus linearen oder verzweigten Alkylenresten mit 1 bis 12 Kohlenstoffatomen ausgewählt ist, stehen, wobei eines der Symbole **W** eine freie Valenz sein kann;
■ das Symbol **Y** für eine freie Valenz oder einen zweiwertigen Rest, der aus linearen oder verzweigten Alkylenresten mit 1 bis 12 Kohlenstoffatomen ausgewählt ist und ein Heteroatom, vorzugsweise ein Sauerstoffatom, enthalten kann, steht;
■ das Symbol **R₁** für ein Wasserstoffatom oder einen einwertigen Kohlenwasserstoffrest, der aus linearen oder verzweigten Alkylresten mit 1 bis 12 Kohlenstoffatomen ausgewählt ist, und vorzugsweise ein Wasserstoffatom oder einen Methylrest steht;
■ (2) 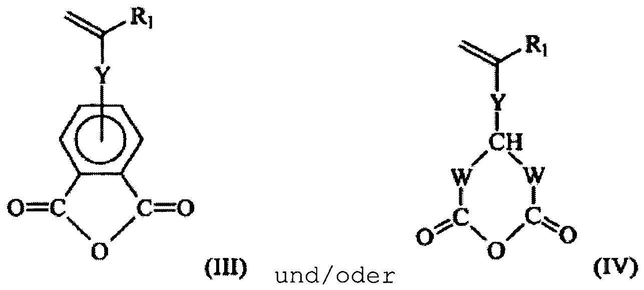 worin:
■ die Symbole **W** gleich oder verschieden sind und für einen zweiwertigen Kohlenwasserstoffrest, der aus linearen oder verzweigten Alkylenresten mit 1 bis 12 Kohlenstoffatomen ausgewählt ist, stehen, wobei eines der Symbole **W** eine freie Valenz sein kann;
■ das Symbol **Y** für eine freie Valenz oder einen zweiwertigen Rest, der aus linearen oder verzweigten Alkylenresten mit 1 bis 12 Kohlenstoffatomen ausgewählt ist und ein Heteroatom, vorzugsweise ein Sauerstoffatom, enthalten kann, steht;
■ das Symbol **R₁** für ein Wasserstoffatom oder einen einwertigen Kohlenwasserstoffrest, der aus linearen oder verzweigten Alkylresten mit 1 bis 12 Kohlenstoffatomen ausgewählt ist, und vorzugsweise ein Wasserstoffatom oder einen Methylrest steht;
■ (3) 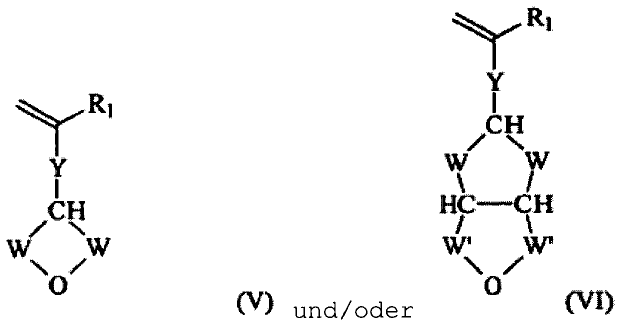 worin:
■ die Symbole **W** gleich oder verschieden sind und für einen zweiwertigen Kohlenwasserstoffrest, der aus linearen oder verzweigten Alkylenresten mit 1 bis 12 Kohlenstoffatomen ausgewählt ist und mindestens eine Hydroxylfunktion enthalten kann, stehen, wobei eines der Symbole **W** für (V) eine freie Valenz sein kann und die beiden Symbole **W** für (VI) gleichzeitig eine freie Valenz sein können;
■ die Symbole **W'** gleich oder verschieden sind und für einen zweiwertigen Kohlenwasserstoffrest, der aus linearen oder verzweigten Alkylenresten mit 1 bis 12 Kohlenstoffatomen ausgewählt ist, stehen, wobei mindestens eines der Symbole **W'** eine freie Valenz sein kann;
■ das Symbol **Y** für eine freie Valenz oder einen zweiwertigen Rest, der aus linearen oder verzweigten Alkylenresten mit 1 bis 12 Kohlenstoffatomen ausgewählt ist und ein Heteroatom, vorzugsweise ein Sauerstoffatom, enthalten kann, steht;
■ das Symbol **R₁** für ein Wasserstoffatom oder einen einwertigen Kohlenwasserstoffrest, der aus linearen oder verzweigten Alkylresten mit 1 bis 12 Kohlenstoffatomen ausgewählt ist, und vorzugsweise ein Wasserstoffatom oder einen Methylrest steht;
■ und (4) 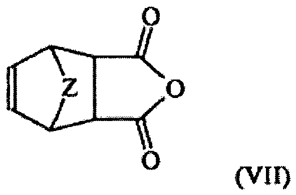 worin:
■ die Symbole **W** gleich oder verschieden sind und für eine freie Valenz und einen zweiwertigen Kohlenwasserstoffrest, der aus linearen oder verzweigten Alkylenresten mit 1 bis 2 Kohlenstoffatomen ausgewählt ist, stehen;
■ das Symbol **Z** für einen zweiwertigen Rest, der aus einem Kohlenstoffatom oder einem Heteroatom ausgewählt ist, steht.

6. Verfahren nach einem der Ansprüche 1 bis 5, **dadurch gekennzeichnet, dass** es sich bei der Organosiliciumverbindung mit ≡Si-H-Einheiten um ein epoxidiertes Silan oder ein epoxidiertes Polyorganosiloxan (POS) handelt.

7. Hydrosilylierungsverfahren nach einem der Ansprüche 1 bis 6, **dadurch gekennzeichnet, dass** es sich bei der Organosiliciumverbindung mit =Si-H-Einheiten um ein epoxidiertes Polyorganosiloxan (POS) handelt, gebildet durch ein lineares oder cyclisches Silikonöl mit den durchschnittlichen Formeln: 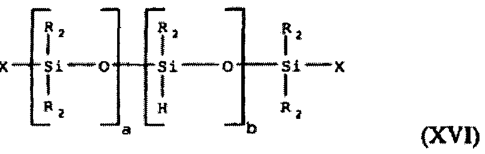 und/oder 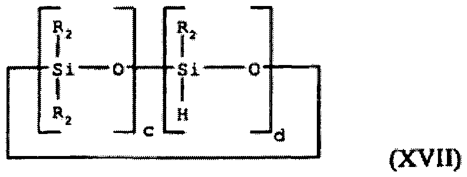 worin:
■ die Symbole **R₂** gleich oder verschieden sind und für einen einwertigen Kohlenwasserstoffrest, der aus einem Phenylrest und linearen oder verzweigten Alkylrest mit 1 bis 6 Kohlenstoffatomen ausgewählt ist, stehen;
■ die Symbole **X** gleich oder verschieden sind und für einen einwertigen Rest, der aus **R₂**, einem Wasserstoffatom, einem Methoxyrest und einem Ethoxyrest ausgewählt ist, stehen;
■ a und b für solche ganze oder gebrochene Zahlen stehen, dass:
- 0 < a ≤ 200, vorzugsweise 0 < a ≤ 99,
- 0 ≤ b ≤ 200, vorzugsweise 1 < b ≤ 100, und mindestens einer der beiden Reste X für einen Wasserstoffrest steht, wenn b = 0,
- 5 < a+b ≤ 200, vorzugsweise 10 < a+b ≤ 100,
■ c und d für solche ganze oder gebrochene Zahlen stehen, dass:
- 0 < c < 5, vorzugsweise 0 < c < 3,
- 1 < d < 10, vorzugsweise 1 < d < 5,
- 3 < a+b < 10, vorzugsweise 3 < a+b < 5.

8. Hydrosilylierungsverfahren nach einem der Ansprüche 1 bis 7, **dadurch gekennzeichnet, dass** die Metallmenge zwischen 0,1% und 5%, bezogen auf das Gewicht des inerten Trägers, liegt.

9. Hydrosilylierungsverfahren nach einem der Ansprüche 1 bis 8, **dadurch gekennzeichnet, dass** die Metallmenge der Katalysatorzusammensetzung zwischen 1 und 1000 ppm, bezogen auf das Gewicht des Silikonöls, liegt.

10. Hydrosilylierungsverfahren nach einem der Ansprüche 1 bis 9, **dadurch gekennzeichnet, dass** es sich bei dem Metall der Katalysatorzusammensetzung um Platin handelt.

11. Hydrosilylierungsverfahren nach einem der Ansprüche 1 bis 10, **dadurch gekennzeichnet, dass** der inerte Träger aus der Gruppe umfassend Ruß, Kohle, Aluminiumoxid, Bariumsilikat und Bariumoxid ausgewählt wird.

12. Verfahren zur Hydrosilylierung, nach einem der Ansprüche 7 bis 11, eines Silikonöls mit einem Synthon nach einem der vorhergehenden Ansprüche, **dadurch gekennzeichnet, dass** es die folgenden Schritte umfasst:
a) das Synthon wird in das Reaktionsmedium eingetragen;
b) eine Menge von 5 bis 5000 ppm, vorzugsweise 10 bis 100 ppm, heterogene Katalysatorzusammensetzung, bezogen auf die Gesamtmasse der Reaktanten, wird unter Inertgas in das Reaktionsmedium eingetragen;
c) eine Menge von 500 bis 5000 ppm Wasser wird in das Reaktionsmedium eingetragen;
d) die anorganische nichtnucleophile Base wird in das Reaktionsmedium eingetragen; wobei die Schritte a, b, c und d in der angegebenen Reihenfolge oder in beliebiger Reihenfolge durchgeführt werden können;
e) das Medium wird auf eine Temperatur zwischen 25°C und 200°C und vorzugsweise zwischen 50°C und 160°C erhitzt;
f) dann wird das Silikonöl über einen Zeitraum zwischen 0 und 24 Stunden, vorzugsweise zwischen 2,5 und 5 Stunden, eingetragen; wobei das Synthon/Silikon-Molverhältnis zwischen 1 und 5, vorzugsweise zwischen 1 und 2, liegt;
g) dann wird die Reaktionsmasse zur Trennung der heterogenen Katalysatorzusammensetzung und des funktionalisierten Silikonöls filtriert;
h) schließlich wird das funktionalisierte Silikonöl in Gegenwart einer anorganischen nichtnucleophilen Base, die mit der oben angeführten identisch oder davon verschieden (vorzugsweise identisch) ist, entgast; und
i) schließlich wird die Reaktionsmasse mindestens einem Arbeitsgang zur Entfernung von festen Rückständen aus dem Reaktionsmedium (vorzugsweise durch Filtration oder durch Schwerkraft) unterworfen, so dass man das funktionalisierte Silikonöl gewinnt.

13. Verfahren nach einem der Ansprüche 1 bis 12, **dadurch gekennzeichnet, dass** man das Silikonöl und das Synthon im Reaktionsmedium in Abwesenheit von Lösungsmittel umsetzt.

14. Verwendung der durch das Verfahren nach einem der Ansprüche 7 bis 13 erhaltenen Silikonöle als Schmiermittel zur Herstellung von Antihaftbeschichtungen für Träger, insbesondere flexible Träger.

## Claims

1. Process for functionalizing at least one organosilcon compound carrying at least one ≡SiH unit per molecule, by hydrosilylation of at least one synthon carrying at least one unsaturation (preferably ethylenic unsaturation) containing at least one heterocycle in which the hetero atom is preferably oxygen, said hydrosilylation being carried out in the presence of a heterogeneous catalytic composition comprising at least one metal which is chosen from the group comprising: cobalt, rhodium, ruthenium, platinum and nickel, and which is deposited on an inert support, **characterized in that** the hydrosilylation is carried out in the presence of at least one inorganic non-nucleophilic base and of water in an amount of between 500 and 5000 ppm, relative to the total mass of synthon and of organosilicon compound.

2. Process according to Claim 1, **characterized in that** the inorganic non-nucleophilic base is selected from the group comprising: hydrogen carbonates or carbonates of alkali metals (preferably of sodium or of potassium), phosphates of alkali metals (preferably of sodium or of potassium), sulphates of alkali metals (preferably of sodium or of potassium) and mixtures thereof.

3. Process according to Claim 1 or 2, **characterized in that** it comprises at least one devolatilization step carried out after the hydrosilylation and in the presence of at least one inorganic non-nucleophilic base.

4. Process according to Claim 3, **characterized in that**, during the hydrosilylation or the devolatilization, an amount of inorganic non-nucleophilic base between 1 and 10 000 ppm, preferably between 10 and 5000, and even more preferably between 100 and 4000, relative to the total mass of synthon and of organosilicon compound, is used.

5. Process according to any one of Claims 1 to 4, **characterized in that** the synthons contain at least one hydrocarbon-based ring, included in which is an oxygen atom, the synthons having the formula:
■ (1) 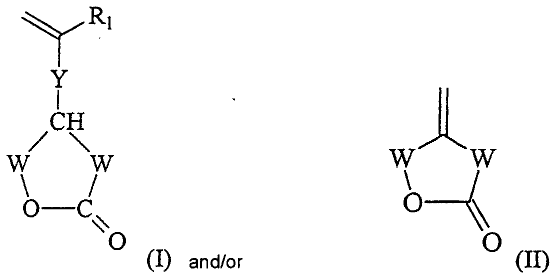 in which:
■ the symbols **W** are identical or different and correspond to a divalent hydrocarbon-based radical chosen from linear or branched alkylene radicals having from 1 to 12 carbon atoms, it being possible for one of the symbols **W** to be a free valency;
■ the symbol **Y** corresponds to a free valency or a divalent radical chosen from linear or branched alkylene radicals having from 1 to 12 carbon atoms and possibly containing a hetero atom, preferably an oxygen atom;
■ the symbol **R₁** corresponds to a hydrogen atom or a monovalent hydrocarbon-based radical chosen from linear or branched alkyl radicals having from 1 to 12 carbon atoms, and preferably a hydrogen atom or a methyl radical;
■ (2) 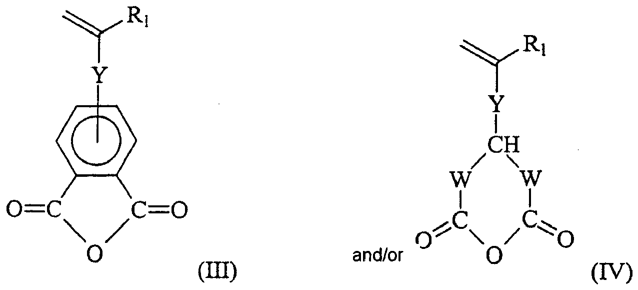 in which:
■ the symbols **W** are identical or different and correspond to a divalent hydrocarbon-based radical chosen from linear or branched alkylene radicals having from 1 to 12 carbon atoms, it being possible for one of the symbols **W** to be a free valency;
■ the symbol **Y** corresponds to a free valency or divalent radical chosen from linear or branched alkylene radicals having from 1 to 12 carbon atoms and possibly containing a hetero atom, preferably an oxygen atom;
■ the symbol **R₁** corresponds to a hydrogen atom or a monovalent hydrocarbon-based radical chosen from linear or branched alkyl radicals having from 1 to 12 carbon atoms, and preferably a hydrogen atom or a methyl radical;
■ (3) 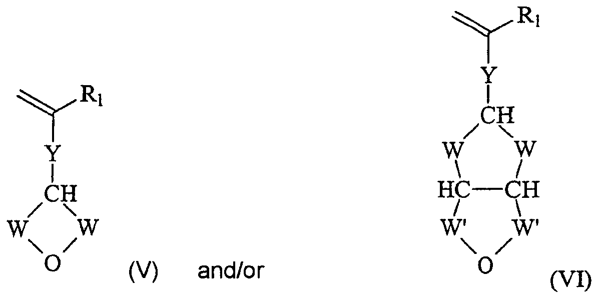 in which
■ the symbols **W** are identical or different and correspond to a divalent hydrocarbon-based radical chosen from linear or branched alkylene radicals having from 1 to 12 carbon atoms and possibly containing at least one hydroxyl function; it being possible for one of the symbols **W** to be a free valency for (V) and the two symbols **W** can simultaneously be a free valency for (VI);
■ the symbols **W'** are identical or different and correspond to a divalent hydrocarbon-based radical chosen from linear or branched alkylene radicals having from 1 to 12 carbon atoms; it being possible for at least one of the symbols **W'** to be a free valency;
■ the symbol **Y** corresponds to a free valency or a divalent radical chosen from linear or branched alkylene radicals having from 1 to 12 carbon atoms and possibly containing a hetero atom, preferably an oxygen atom;
■ the symbol **R₁** corresponds to a hydrogen atom or a monovalent hydrocarbon-based radical chosen from linear or branched alkyl radicals having from 1 to 12 carbon atoms, and preferably a hydrogen atom or a methyl radical;
■ and (4) 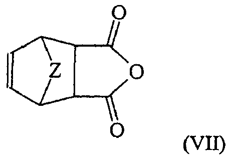 in which:
■ the symbols **W** are identical or different and correspond to a free valency and a divalent hydrocarbon-based radical chosen from linear or branched alkylene radicals having from 1 to 2 carbon atoms;
■ the symbol **Z** corresponds to a divalent radical chosen from a carbon atom or a hetero atom.

6. Process according to any one of Claims 1 to 5, **characterized in that** the organosilicon compound containing ≡SiH units is an epoxidized silane or an epoxidized polyorganosiloxane (POS).

7. Hydrosilylation process according to any one of Claims 1 to 6, **characterized in that** the organosilicon compound containing ≡SiH units is an epoxidized polyorganosiloxane (POS) formed by a linear or cyclic silicone oil and of average formulae: 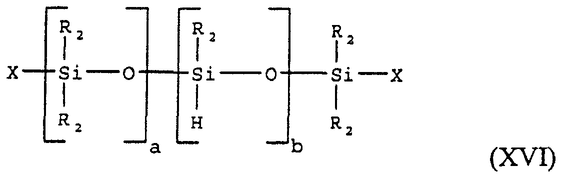 and/or 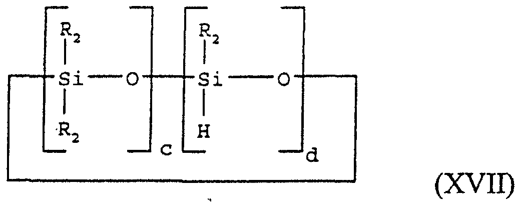 in which
■ the symbols **R₂** are identical or different and correspond to a monovalent hydrocarbon-based radical chosen from the phenyl radical and linear or branched alkyl radicals having from 1 to 6 carbon atoms;
■ the symbols **X** are identical or different and correspond to a monovalent radical chosen from **R₂**, a hydrogen atom, a methoxy radical and an ethoxy radical;
■ a and b are integers or fractions, such that:
- 0<a≤200, preferably 0<a≤99
- 0<b≤200, preferably 1<b≤100, and at least one of the two X corresponding to the hydrogen radical if b = 0
- 5<a+b≤200, preferably 10<a+b≤100
■ c and d are integers or fractions, such that:
- 0<c<5, preferably 0<c<3
- 1<d<10, preferably 1<d<5
- 3<a+b<10, preferably 3<a+b<5.

8. Hydrosilylation process according to any one of Claims 1 to 7, **characterized in that** the amount of metal is between 0.1% and 5% relative to the weight of the inert support.

9. Hydrosilylation process according to any one of Claims 1 to 8, **characterized in that** the amount of metal of the catalytic composition is between 1 and 1000 ppm relative to the weight of the silicone oil.

10. Hydrosilylation process according to any one of Claims 1 to 9, **characterized in that** the metal of the catalytic composition is platinum.

11. Hydrosilylation process according to any one of Claims 1 to 10, **characterized in that** the inert support is selected from the group comprising carbon black, charcoal, alumina, barium silicate and barium oxide.

12. Process for hydrosilylation, according to one of Claims 7 to 11, of a silicone oil with a synthon according to one of the preceding claims, **characterized in that** it comprises the following steps:
a) the synthon is introduced into the reaction medium;
b) an amount of 5 to 5000 ppm, preferably of 10 to 100 ppm, of heterogeneous catalytic composition, relative to the total mass of the reagents, is introduced under inert gas into the reaction medium;
c) an amount of 500 to 5000 ppm of water is introduced into the reaction medium;
d) the inorganic non-nucleophilic base is introduced into the reaction medium;
it being possible for steps a, b, c and d to be carried out in this order or in no particular order;
e) said medium is heated to a temperature of between 25°C and 200°C, and preferably between 50°C and 160°C;
f) the silicone oil is then introduced over a period of between 0 and 24 hours, preferably between 2.5 and 5 hours; the synthon/silicone molar ratio being between 1 and 5, preferably between 1 and 2;
g) the reaction mass is then filtered in order to separate the heterogeneous catalytic composition and the functionalized silicone oil;
h) the functionalized silicone oil is finally devolatilized in the presence of an inorganic non-nucleophilic base that may be identical or different to that mentioned above (preferably identical); and
i) the reaction mass is finally subjected to at least one operation to remove the solid residues from the reaction medium (preferably by filtration or by gravity), so as to recover the functionalized silicone oil.

13. Process according to one of Claims 1 to 12, **characterized in that** the silicone oil and the synthon react in the reaction medium in the absence of solvent.

14. Use of the silicone oils obtained by means of the process according to any one of Claims 7 to 13, as lubricants for preparing anti-adhesive coatings for supports, in particular flexible supports.
